# EUROPEAN PATENT APPLICATION

(11) **EP 1 288 821 A1**
(43) Date of publication of application: **05.03.2003**
(21) Application number: 02078650.5
(22) Date of filing: 02.09.2002
(51) Int. Cl.: G06F 17/60

(54) **Advertising concept**

(30) Priority: 03.09.2001 NL 1018873
(71) Applicant: Twofoldmedia BV, 3016 BL Rotterdam (NL)
(72) Inventor: Van Stijn, Dave, NL-4141 MX Leerdam (NL); Van Oirschot, Franciscus Cornelis, NL-2102 CE Heemstede (NL)
(74) Representative: Assendelft, Jacobus H.W.

(57) **Abstract**

System with which dead space of a publisher product can be filled with high value contents, comprising a conveniently programmed computer and a publisher product production device, such as a printer, wherein the computer is designed to offer suppliers of contents, such as advertisements, the opportunity to place contents, conditions included, in a record that can be examined by buyers, such as publishers, wherein preferably the buyers can give conditions such that by "matching" of conditions of suppliers and buyers a set is made from which the buyer can select, and wherein the contents from the set or record is directly transferred to the printer of the publisher product.

## Description

This concept relates to a system and method to produce a communication means, which can be embodied in any desired manner, such as on paper (e.g. newspaper, magazine, book) or in electronic or magnetic format (e.g. audio, video), the distribution of which is preferably widespread, e.g. through subscription, while the contents can cover the field of information provision and/or leasure, and concerns a.o. a better use thereof.

In the following, the term "communication medium" is refered to as "newspaper", although it must be clear that application of the CONCEPT is not to be construed limited to the field of newspapers. With the term "contents" here each message is meant, such as a journalism article, a story, a photograph/drawing or a commercial message.

Particulalry the CONCEPT relates to newspapers containing a commercial message. More particularly, the CONCEPT is for newspapers containing different types of contents.

When producing a newspaper, one typically has more (page) space than the desired contents uses space. This superfluous or dead space is nowadays filled with low value contents (typically (almost) free advertisings).

According to one aspect an object of the CONCEPT is to offer the possibility to fill this dead space with higher value contents. In this way the newspaper is used better. The term "high value" can relate here to the quality or the earnings for the publisher when said contents is entered.

Accordingly the CONCEPT proposes to offer suppliers of contents for entry in the newspaper, such as advertisers, the opportunity to place said contents in an entry record, that can be examined by several independent publishers (the "afnemers" of contents), to select therefrom contents to be entered. Preferably an publisher is offered a set of contents from the entry record, which are best adapted to fill the dead space which is available to the publisher at that time. This set is made available by means of a "matching" procedure wherein on the basis of desires of the publisher, such as at least one feature of the dead space to be filled, contents can be selected from said entry record. In a prefered embodiment the contents is therefor added to the entry record, such that it can be categorised ("addressable") according to one or more, preferably, predetermined selection criteria, such as for which type of target group or newspaper entry is desired, of the earnings for the publisher with entry, or desired time of entry (publishing), or required dimension for entry. By this matching procedure the publisher can efficiently find an adapted contents, while to the supplier the chances are improved that its contents is selected.

Preferably this set is only temporarily stored by the system, such as for the time a publisher makes use of the system to select contents.

Preferably data are used corresponding to the Sebuco or Euro standard.

According to a particular embodiment of the CONCEPT the supplier receives an entry message, when its contents from the entry record is selected by an publisher to be entered. By said message the supplier is also informed in which newspaper and/or at which time said contents is entered. In this way the supplier can take measures which correspond to said entry.

According to a further development of the CONCEPT, the response is measured of buyers of the newspaper (te "readers") to the entry of the contents selected from the entry record, to e.g. determine the reward level by the supplier to the publisher in dependence therefrom. Preferably supplier and/or publisher are informed about said response, such that they can e.g. obtain knowledge about the effectiveness of the contents for the objective target group. The easiest way to measure this response is to take care that the entered contents from the entry record contains a message invoking a response, such as with e.g. response advertisements. If this is not the case, the response can e.g. be measured by inquiry.

Preferably the CONCEPT is based on machine data exchange (e.g. magnetic and/or electronic), wherein the contents is memorised in (preferably binary) machine readable code (e.g. magnetic) in the entry record and the publisher can query adapted data from said record by input/output means, thus can examine contents therefrom for fitness for entry and subsequently can select it to preferably transfer it in machine readable code to the production unit for the newspaper, such as the printing apparatus. In connection therewith the suppliers can be offered the possibility to input the contents as machine readable code into the entry record through convenient input/output means. By using (binary) machine readable code from the supplier towards the production unit of the newspaper, it can be effectively guaranteed that the advertising is exactly entered as the advertiser desires. This is of utmost importance, since the advertiser does not know yet when he adds its advertising, in which newspaper and on which location it will arrive. From the viewpoint of efficiency it is prefered that also other data exchange is by machine, such as the entry message to the supplier or giving information about the response. Concerning the data exchange between the system and the users (suppliers and/or publishers) one preferably applies a telecommunication network.

### EXAMPLE

The following is based on a central data processing device (CDPD; e.g. a host computer), connected to a data storage device (DSD; e.g. computer memory). The CDPD is designed (programmed) for the CONCEPT. With the aid of an input/ output means (user terminal; UT1, e.g. a PC) through a telecommunications network a supplier can contact the CDPD. A publisher can also connect to the CDPD by means of an input/output device (user terminal; UT2, e.g. a PC) through a telecommunications network.

The expert will appreciate how to adapt the different equipment (e.g. how the data storage devices can be equipped with a recording and retrieval element, e.g. a writing and/or reading head), programmed and mutually connected (e.g. through data communication lines) for the purpose of mutual data exchange, such that no further attention is paid to this aspect.

The supplier calls in on the CDPD through the telecommunications network and receives from the CDPD an input screen on its UT1 wherein the supplier on-line can enter one or more advertisements, adapted for direct entry, together with entry criteria, such as desired target group, entry technical information (such as dimension of the advertisement, desired or undesired location within the newspaper such as indeed or not between suppliers of sex lines), desired times of entry, number of different newspapers in which entry is desired, the price which the supplier desires to pay for entry. The CDPD stores this input into the DSD.

While a publisher, belonging to a group of publishers each having authorisation to make use of the system based on the CONCEPT, are in the process of assembling a newspaper, he determines a dead space. To fill the dead space, the publisher calls in at the CDPD through the telecommunications network and receives at his UT2 a screen wherein the publisher inputs the so called sumoprofile (a.o. edition and title data of the relative newspaper), entry technical specifications (such as dimensions of the dead space) and publishing date of the relative newspaper.

While UT2 remains connected to the CDPD, the CDPD subsequently carries out a mathcing procedure, wherein the input from the suppliers, stored in the DSD, is evaluated for correspondence with the input of UT2 or an entry criteria devised therefrom by the CDPD, and on the basis of said comparison the CDPD decides if an advertisement is added to the set. In that connection there is a possibility that advertisements are added to the set, either exclusively for which the correspondence is complete, or for which said correspondence is incomplete, however is within a predetermined, acceptable range (e.g. at least 90% correspondence), such that the correspondence is at least substantially complete. The CDPD ranks the advertisements within said set preferably according to the pricelevel which the supplier has accepted to pay for entry.

The set is offered by the CDPD to be consulted by the UT2, wherein e.g. the advertisement with the highest price is shown first on the screen. The publisher examines through the UT2 subsequently one or more advertisements from the set and informs CDPD through UT2 which advertisement is selected to be entered. The CDPD reacts by coding the DSD such that the number of times the relative advertisement may be entered is decreased by one (such that if the relative advertisement may be entered only once, it is no longer available for a next selection) and the CDPD gives this advertisement free such that the publisher can download the advertisement through UT2 to store it into an own data storage device (advertisement storage device; ASD) which is connected to the production apparatus (e.g. printer) with which the newspaper is printed. Thus the publisher can add the advertisement as input by the supplier directly to the lay-out of the newspaper in the computer of the publisher, which lay-out is offered to the printer with which the newspaper is printed. By way of alternative it is feasible that the publisher transfers the data of the advertisement coming from the CDPD to a binary data carrier, such as a diskette of CD-ROM or DVD, to transfer the machine readable code to the production device.

The system stores the set only temporarily, to save memory space. It is possible that the set is only stored in the processing memory of the CDPD, such that the set is e.g. erased at a time that approximately corresponds with outlogging of the publisher, or when the publisher makes a selection from the set, or sends code to the CDPD, that he will make no selection from the relevant set. Possibly the set could be stored some longer, e.g. until a few hours or days after the publisher has unlogged, for which the set can be stored in the DSD to be erased after some time by the CDPD.

The CDPD places a message in the mailbox of the supplier, that the advertisement was entered.

Reactions to the advertisement are received by mail, facsimile, call centre of e-mail. These reactions are entered into the CDPD by a relevant company or the publisher itself with the aid of an input/output means (user terminal; UT3, e.g. a PC) connected to the CDPD via a telecommunications network. Both the supplier and the publisher can retrieve the reactions with the CDPD through UT1 or UT2.

After a predetermined time after publishing, e.g. one month, the updating of the reactions is ended. The CDPD therefor closes the relative record and places a message in the mailbox of the publisher relating to the number of reactions. on the basis of this number, the publisher will send the supplier an invoice.

Preferably the system is designed such that authorised advertisers and publishers can start working with the system within an input screen received onto the UT1 or UT2 from the CDPD after entering a password into the CDPD. The system preferably contains name, address, city and invoice data of the advertiser and publisher, which can be enetered once the advertiser or publisher use the system for the first time, after which the system can give the password automatically.

It must be clear that the CONCEPT can be applied in practise in many different ways. E.g. an example is feasible, based on at least one aspect of the embodiment as disclosed in here, combined with one or more aspects of one or more different embodiments disclosed in here. Also an embodiment is feasible, based on a here disclosed embodiment or devised therefrom, and at least one aspect removed therefrom.

Also embodiments belong to the CONCEPT, making use of one or more features which are equivalent to which is disclosed.

## Claims

1. System with which dead space of a publisher product can be filled with high value contents, comprising a conveniently programmed computer and a publisher product production device, such as a printer, wherein the computer is designed to offer suppliers of contents, such as advertisements, the opportunity to place contents, conditions included, in a record that can be examined by buysers, such as publishers, wherein preferably the buyerrs can give conditions such that by "matching" of conditions of supplier and buyer a set is made from which the buyer can select, and wherein the contents from the set or record is directly transferred to the printer of the publisher product.

2. System according to claim 1, wherein the computer is designed such that the data about the contents input by a supplier into the record is catagorised according to predetermined entry criteria, such as for which type of target group or publisher product entry is desired, preferably by making use of the Sebuco or Euro standard.

3. System according to claim 1 or 2, wherein the computer is designed to give the supplier a message, if its contents is accepted to be entered.

4. System according to any of the preceeding claims, wherein the computer is part of a telecommunications network to exchange data between suppliers, buyers and printers.

5. System according to any of the preceeding claims, wherein the computer is designed to present to a buyer a set contents and to decrease a content associated entry frequency code in its record by one in reaction to selection input from said set and making available selected contents for downloading towards the printer by the buyer.

6. System according to any of the preceeding claims, wherein the set is stored in the (volatile) processing memory of the computer.
